# EUROPEAN PATENT APPLICATION

(11) **EP 1 413 504 A1**
(43) Date of publication of application: **28.04.2004**
(21) Application number: 03023292.0
(22) Date of filing: 15.10.2003
(51) Int. Cl.: B62J 9/00, B62J 1/00

(54) **Bicycle saddle with storage compartment**

(30) Priority: 24.10.2002 IT BO20020672
(71) Applicant: Cassani, Osvaldo, 31030 Castelcucco (Treviso) (IT)
(72) Inventor: Cassani, Osvaldo, 31030 Castelcucco (Treviso) (IT)
(74) Representative: Modiano, Guido, Dr.-Ing.

(57) **Abstract**

A bicycle saddle (1) with storage compartment comprises a lower supporting structure (5) that is provided with means (3) for fixing to the seat tube (2) of the frame and an upper padded seat (6) that is provided with coupling means (7) that can be operated manually, the fixed structure (5) and the upper seat (6) being concave, with their concavities directed respectively upward and downward, delimiting a compartment inside the saddle (1).

## Description

The present invention relates to a bicycle saddle with storage compartment.

The common need of cyclists to carry items during excursions requires providing bicycles with storage compartments, which can be detachable accessories or can be an integral part of the bicycle.

Detachable storage compartments are substantially bags of various shapes and sizes that can be fixed to the frame, saddle, or other parts of the bicycle by means of press-studs, Velcro or other systems providing safe coupling and quick removal.

However, the cyclist must be careful to remove the storage compartment every time he leaves the bicycle unattended, since the storage compartment can be easily and quickly stolen.

Fixed storage compartments have the advantage that they cannot be stolen quickly. They can be provided monolithically with various parts of the bicycle, although the most successful installation position is located at the saddle. Containers of various shapes can be fixed to a conventional saddle so that they are located below the larger part, i.e., the rear part, and so that their opening is behind the cyclist so as to allow the simplest possible access to their interior.

However, the opening, although being provided with safety locking elements, can open during use of the bicycle: in particular, during use on rough terrain (a typical case is constituted by mountain bikes), continuous shaking can cause the accidental opening of the storage compartment with consequent escape of its contents.

Likewise, a stationary cyclist (for example at a traffic light) can become easily the victim of a pickpocket, who with appropriate dexterity can open the storage compartment without attracting the attention of the cyclist and steal its contents.

The aim of the present invention is to obviate the above-cited drawbacks and meet the mentioned requirements, by providing a saddle with storage compartment for bicycles that is of the fixed-installation type and in which the interior of the storage compartment cannot be accessed during use of the bicycle.

Within this aim, an object of the present invention is to provide a structure that is simple, relatively easy to provide in practice, safe in use, effective in operation, and has a relatively low cost.

This aim and this and other objects that will become better apparent hereinafter are achieved by the present bicycle saddle with storage compartment, characterized in that it comprises a lower supporting structure that is provided with means for fixing to the seat post of the frame and an upper padded seat that is provided with coupling means that can be operated manually, said fixed structure and said upper seat being concave, with their concavities directed respectively upward and downward, delimiting a compartment inside the saddle.

Further characteristics and advantages of the invention will become better apparent from the following detailed description of a preferred but not exclusive embodiment of a bicycle saddle with storage compartment according to the invention, illustrated by way of non-limiting example in the accompanying drawings, wherein:
Figure 1 is a side view of a bicycle saddle with storage compartment according to the invention;
Figure 2 is a sectional side view, taken along a vertical longitudinal plane, of an upper seat of the bicycle saddle with storage compartment according to the invention;
Figure 3 is a plan view of a fixed supporting structure of the bicycle saddle with storage compartment according to the invention;
Figure 4 is a sectional side view, taken along the line IV-IV of Figure 3, of a fixed supporting structure of the bicycle saddle with storage compartment according to the invention;
Figure 5 is a perspective view of a bicycle saddle with storage compartment according to the invention.

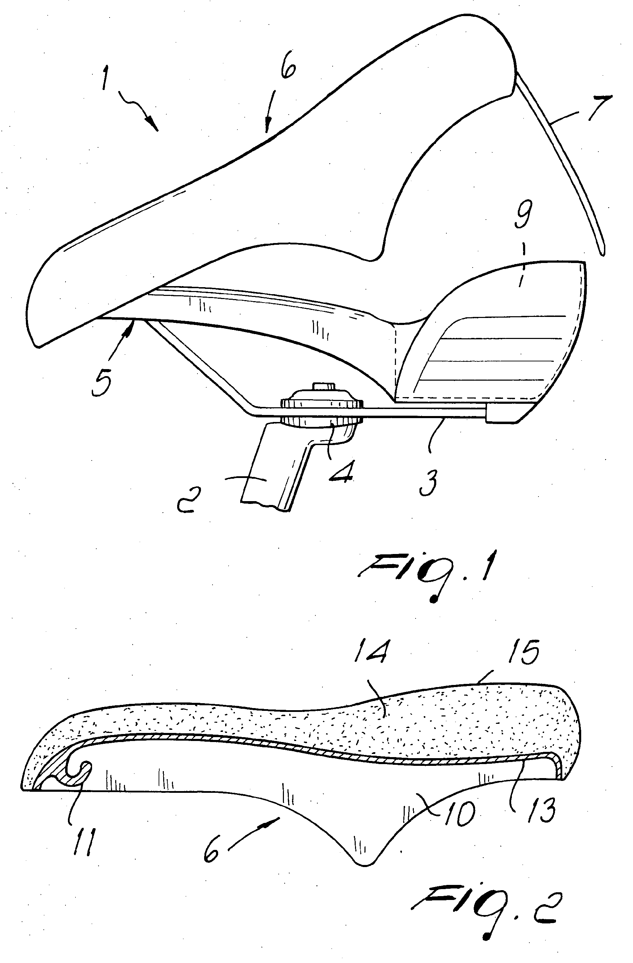

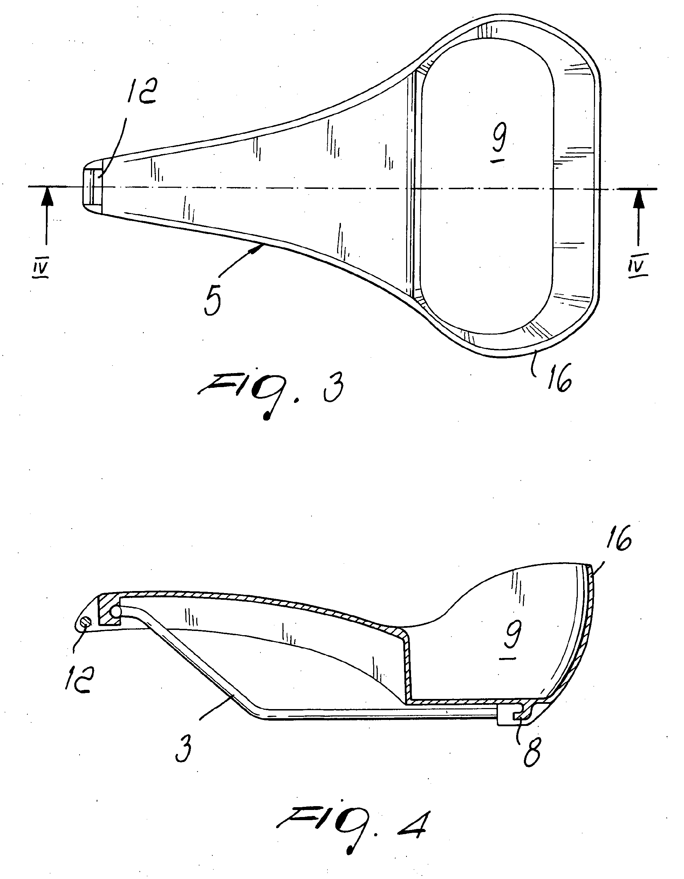

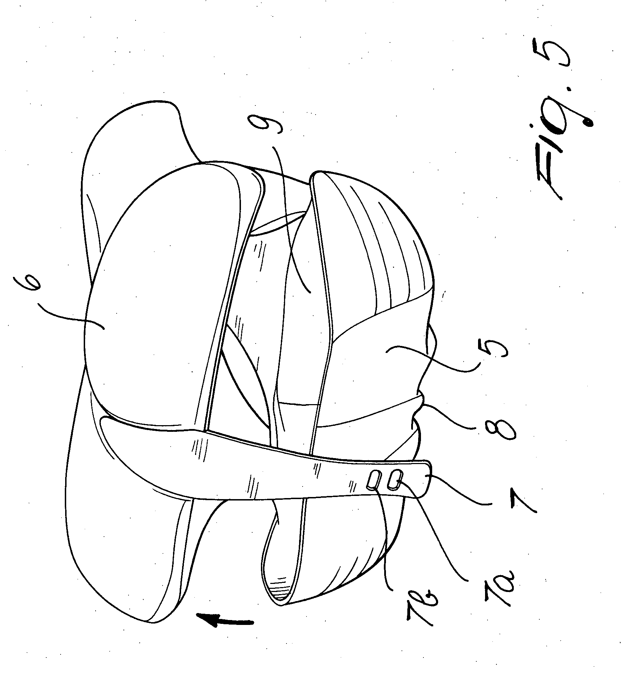

With particular reference to the figures, the reference numeral 1 generally designates a bicycle saddle with storage compartment that is fixed to a seat post 2, which is rigidly coupled to the frame of the bicycle by means of a fixing rail 3 to which it is anchored by means of a closure clamp 4; the rail 3 is rigidly coupled to a fixed supporting structure 5 of the saddle 1 and is of a substantially known type.

An upper seat 6 is pivoted to the fixed supporting structure 5 and is located above it; a closure flap 7 is fixed to the upper seat 6, is provided with two locking slots 7a and 7b, and is suitable to engage a protrusion 8. The fixed supporting structure 5 has a concave shape in which the concavity is directed upward, forming a lower jaw 9 in its rear portion; the upper seat 6 is also concave (albeit less significantly), but its concavity is directed downward, forming an upper jaw 10: the storage compartment is delimited between the lower jaw 9 and the upper jaw 10.

The upper seat 6 is associated, along a transverse horizontal axis, with the supporting structure 5 by means of a hinge 11 that is provided in its front part and is suitable to engage the pivot 12, which is located at the front in the structure 5. The hinge 11 is rigidly coupled to the rigid frame 13, over which a soft and shock-absorbing material (such as foam rubber or other similar materials) is distributed, constituting the padding 14, which in turn is covered by a covering 15 made of leather (or equivalent material).

In the lower fixed structure 5, the jaw is delimited by a perimetric wall 16, which also has a structural function, since when the upper seat 6 is arranged so as to close the compartment (constituted by the two jaws 9 and 10) onto the fixed structure 5, the wall 16 supports the seat 6 and the cyclist who is sitting on it.

The operation of the invention is as follows: when the upper seat 6 is raised, it is possible to store objects in the jaw 9; by placing the upper seat 6 adjacent to the fixed supporting structure 5, the compartment is closed. Closure is ensured by the flap 7, which accommodates the protrusion 8 inside one of the two slots 7a and 7b. The presence of two slots 7a and 7b is due to the possibility that over time the deformations of the materials may make the coupling between the protrusion 8 and the slot 7a too weak; in this case, the defect is compensated by coupling the protrusion 8 to the second slot 7b.

During use of the bicycle, the interior of the storage compartment cannot be accessed and cannot open accidentally, since this maneuver is hindered by the cyclist who is sitting on the upper seat 6.

It has thus been shown that the invention achieves the proposed aim and object.

The invention thus conceived is susceptible of numerous modifications and variations, all of which are within the scope of the inventive concept.

To increase user comfort, it is possible to provide slots that are distributed along the contact surface between the fixed supporting structure 5 and the upper seat 6 and are suitable to allow the exit of one or more cables from the inside of the storage compartment, in order to allow the cyclist to use headphones or earphones connected to radio or telephone equipment located inside the storage compartment.

The surfaces that remain visible during use of the bicycle can be advantageously covered with reflective bands in order to increase the safety of the cyclist.

Further, all the details may be replaced with other technically equivalent ones.

In the embodiments cited above, individual characteristics, given in relation to specific examples, may actually be interchanged with other different characteristics that exist in other embodiments.

Moreover, it is noted that anything found to be already known during the patenting process is understood not to be claimed and to be the subject of a disclaimer.

In practice, the materials used, as well as the shapes and the dimensions, may be any according to requirements without thereby abandoning the scope of the protection of the appended claims.
The disclosures in Italian Patent Application No. BO2002A000672 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A bicycle saddle (1) with storage compartment, **characterized in that** it comprises a lower supporting structure (5) that is provided with means (3) for fixing to the seat post (2) of the frame and an upper padded seat (6) that is provided with coupling means (7) that can be operated manually, said fixed structure (5) and said upper seat (6) being concave, with their concavities directed respectively upward and downward, delimiting a compartment inside the saddle (1).

2. The saddle (1) according to claim 1, **characterized in that** said upper seat (6) is pivoted, by way of said manually actuatable coupling means (11), about an axis that is horizontal and transverse with respect to the bicycle, to the fixed structure (5) at its front end, oscillating from a closed position to an open position in which the rear part of said seat (6) is spaced from said fixed structure (5) and said compartment is accessible.

3. The saddle (1) according to one or more of the preceding claims, **characterized in that** said compartment is covered internally with soft materials.

4. The saddle (1) according to one or more of the preceding claims, **characterized in that** said fixed structure (5) has an opening in its lower part, toward the outside, which is suitable to ensure the outflow of any water that has accidentally entered said compartment.

5. The saddle (1) according to one or more of the preceding claims, **characterized in that** slots are distributed along the surfaces for contact between the fixed structure (5) and the upper seat (6) when said seat (6) assumes the configuration of said closed position and are suitable to allow the exit of cables from the compartment.

6. The saddle (1) according to one or more of the preceding claims, **characterized in that** said structure (5) has, in a lower region thereof, standard elements (3, 4) for anchoring to the seat post (2).

7. The saddle (1) according to one or more of the preceding claims, **characterized in that** the ends of a closure flap (7) are respectively coupled in the rear part of the fixed structure (5) and suitable to engage in a protrusion (8) of the upper seat (6) according to a plurality of configurations that entail a different forcing in the coupling between the fixed structure (5) and the upper seat (6).

8. The saddle (1) according to one or more of claims 1-6, **characterized in that** the ends of a closure flap (7) are respectively rigidly coupled in the rear part of the upper seat (6) and suitable to engage in a protrusion (8) of the fixed structure (5) according to a plurality of configurations that entail different forcing in the coupling between the fixed structure (5) and the upper seat (6).
